# EUROPÄISCHE PATENTSCHRIFT

(11) **EP 1 614 946 B1**
(45) Veröffentlichungstag und Bekanntmachung des Hinweises auf die Patenterteilung: **26.03.2008**
(21) Anmeldenummer: 05106059.8
(22) Anmeldetag: 05.07.2005
(51) Int. Cl.: F16K 25/00, F02M 25/07

(54) **Metallisches Ventil**
Metallic valve
Soupape métallique

(30) Priorität: 10.07.2004 DE 102004033476
(43) Veröffentlichungstag der Anmeldung: 11.01.2006
(73) Patentinhaber: Nanogate AG, 66121 Saarbrücken (DE)
(72) Erfinder: Sander, Jürgen Dr., 66132 Saarbrücken (DE)
(74) Vertreter: Jönsson, Hans-Peter

(56) Entgegenhaltungen:
- EP-A- 1 247 956
- WO-A-02/23033

## Beschreibung

Gegenstand der Erfindung ist ein metallisches Ventil, insbesondere eines Abgasrückführsystems eines Verbrennungsmotors, wobei der Ventilteller eine keramische Beschichtung aufweist.

Auf den Dichtflächen von Ventilen der Abgasrückführsysteme von Verbrennungsmotoren scheidet sich Kondensat aus den Abgasen der Verbrennungskammern ab. Diese Kondensate "verlacken" zu teerartigen, rußigen Rückständen, die die Dichtflächen der Ventile verkleben. Dadurch wird ein höherer Kraftaufwand zum Öffnen der Ventile notwendig. Diese Kraft wird im Folgenden als Abzugskraft bezeichnet. Üblicherweise müssen die Ventile Temperaturen im Bereich von 400 bis 450 °C standhalten können. In neueren Motoren werden die Abgase teilweise vorgekühlt, was zu verstärkter Kondensatbildung im Ventil führen kann.

EP 1247956 A2 **beschreibt eine thermische Schutzschicht aus Zirkoniumoxid, die eine Schichtdicke von 80 µm aufweisen kann.**

WO 02/23033 A1 beschreibt eine Silikatbeschichtung mit einer Schichtdicke zwischen 2 und 9 µm auf Ventiltellern von Abgasrückführventilen zur Verbesserung des Laufverhaltens und wird als nächstliegender Stand der Technik angesehen.

US 4,106,449 A beschreibt eine PTFE-Beschichtung von Teilen eines Abgasrückführventils zur Verhinderung der Anhaftung von den sich bildenden Kondensaten. Diese Ventilbeschichtung ist für Abgastemperaturen im Bereich von 200 bis 300 °C ausgelegt.

US 4,497,335 A beschreibt eine Teflonbeschichtung eines Ventilsitzes in einem Kontrollventil eines Abgasrückführsystems.

DE 10163646 A1 beschreibt eine Antihaftbeschichtung, in der auf ein Substrat eine Keramik, ein Metall, ein Zement mit poröser Struktur aufgebracht wird und anschließend ein anorganisch - organisches Nanokompositmaterial aufgebracht wird, das die Poren des darunter liegenden porösen Materials ausfüllt.

DE 19929616 A1 beschreibt ein Beschichtungsmittel zum Schutz vor thermischer Oxidation aus einem Phosphorsilikat-Nanosol.

US 5,052,349 A beschreibt die Beschichtung einer Verbrennungskammer mit Zirkoniumoxid als Hitzeschutz.

US 4,346,870 A beschreibt die Anbringung einer Zirkoniumoxidplatte auf einen Ventilteller mit Hilfe eines Flansches als Hitzeschutz.

US 6,679,476 B2 beschreibt eine Ventilanordnung, in der der Ventilsitz aus Zirkoniumoxid gefertigt sein kann und der Ventilteller aus Keramik bestehen kann. Weder Ventilsitz noch Ventilteller weisen eine Beschichtung auf.

US 6,460,559 B2 beschreibt eine Ventilanordnung, bei der sowohl der Sitz als auch die Feder keramisch sein können. Die Teile dieses Ventils sind nicht beschichtet.

Aufgabe der vorliegenden Erfindung ist es, eine Beschichtung eines metallischen Ventils, insbesondere eines Abgasrückführsystems eines Verbrennungsmotors, bereitzustellen, welche die Kraft zum Öffnen des Ventils verringert, wenn der Ventilteller und/oder der Ventilsitz mit einem Abgaskondensat verschmutzt ist, beziehungsweise das Anhaften von Verschmutzungen verhindert oder wenigstens vermindert.

Die vorgenannte Aufgabe wird in einer ersten Ausführungsform gelöst durch ein metallisches Ventil, insbesondere eines Abgasrückführsystems eines Verbrennungsmotors, das dadurch gekennzeichnet ist, dass der Ventilteller und/oder der Ventilsitz eine keramische Beschichtung mit einer Schichtdicke in einem Bereich von 10 bis 1000 nm aufweist.

Die Anwendbarkeit der erfindungsgemäßen Technologie ist nicht auf metallische Ventile von Abgasrückführsystemen von Verbrennungsmotoren beschränkt, sondern lässt sich bei allen Ventilen einsetzen, die hitzebeständig sein müssen und Gefahr laufen zu verkleben.

Darüber hinaus kann die Beschichtung auf metallischen Oberflächen eingesetzt werden, die in Kontakt mit Abgaskondensaten treten, insbesondere im Abgasstrang, Abgaskühler, Kolben, Verdichterschaufel oder Drosselklappen.

Bei der Weiterentwicklung der bereits bekannten Beschichtungssysteme für Ventilteller wurde überraschend festgestellt, dass gerade eine besonders dünne Beschichtung mit einer Schichtdicke von bis zu 1000 nm die Abzugskraft des Ventiltellers gegenüber einem unbeschichteten Ventilteller bis zu 30 % reduziert. Auch gegenüber der bereits bekannten silikatischen Beschichtung konnte die Abzugskraft mit diesen besonderes dünnen Schichten signifikant verringert werden.

Keramik im Sinne der vorliegenden Erfindung bezeichnet einen anorganischen nichtmetallischen Stoff oder ein anorganisch nichtmetallisches Stoffgemisch welche(r)s bei der Herstellung durch eine Temperaturbehandlung, bevorzugt bei etwa 500°C, gesintert wird und teilweise kristallisiert ist.

Keramische Beschichtungen sind erfindungsgemäß deshalb notwendig, da in Abgasrückführventilen üblicherweise Temperaturen von 400 bis 450 °C auftreten können. In Ausnahmefällen und bestimmten Motorkonstruktionen müssen diese Ventile auch Temperaturen von 700 bis 800 °C aushalten. Bisher wurde im Stand der Technik für den Mechanismus der Wirkungsweise von Beschichtungen der Ventilteller davon ausgegangen, dass entweder ein Korrosionsvorgang verhindert werden muss, oder die Riefen der gedrehten Teller mit einer Beschichtung geglättet werden müssten. Da jedoch überraschenderweise gerade besonders dünne Beschichtungen mit Schichtdicken < 1µm besonders wirkungsvoll sind, kann die Glättung der Riefen in den gedrehten Tellern nicht der entscheidende Mechanismus sein. Vielmehr scheint die Geschlossenheit und die Kontinuität der Beschichtung entscheidend zu sein. So wurden bei Schichtdicken > 1µm Risse in der Schicht festgestellt. Durch diese Risse kann das Kondensat mit der Metall- oder oxidierten Metalloberfläche des Ventiltellers in Verbindung kommen. Gerade bei direktem Kontakt des Kondensats mit der Metalloberfläche des Ventiltellers scheint es zu besonders starker Verklebung des Ventiltellers mit der Dichtfläche des Ventilsitzes zu kommen.

Vorteilhafterweise liegt die erfindungsgemäße Schichtdicke der Beschichtung in einem Bereich von 100 bis 220 nm. Diese besonders dünnen Beschichtungen führen zu einer besonders großen Verringerung der Abzugskräfte.

Das Material der erfindungsgemäße Beschichtung ist vorteilhafterweise ausgewählt aus Oxiden der Metalle der 3., 4. und/oder 5. Haupt- und nebengruppe des Periodensystems der chemischen Elemente. Besonders geeignet als Beschichtungsmaterial ist Zirkoniumoxid. Erfindungsgemäß wurde überraschend gefunden, dass gerade Zirkoniumoxid, welches nicht katalytisch aktiv ist, die Abgzugskraft besonders stark verringern konnte. Neben Zirkoniumoxid sind vor allem auch Oxide der Nebengruppenmetalle und Erdalkalimetalle geeignet, letztere um hochtemperaturbeständige Beschichtungen zu erhalten. Außer den Oxiden der erwähnten Metalle können auch Nitride, Carbide und/oder andere temperaturbeständige keramische Verbindungen dieser Metalle erfindungsgemäß eingesetzt werden.

Vorteilhafterweise ist die Beschichtung mindestens auf der Dichtfläche des Ventils aufgebracht, da die Beschichtung auf den Dichtflächen maßgeblich für die Verringerung der Abzugskräfte ist. Besonders vorteilhaft ist es, wenn nur die Dichtflächen beschichtet werden, da hierdurch der Verbrauch des Beschichtungsmaterials reduziert werden kann und so der Prozess ökonomischer gestaltet werden kann.

Es ist erfindungsgemäß bevorzugt, wenn der Ventilteller aus Aluminium oder Stahl besteht, insbesondere aus Edelstahl besteht, da das Ventil eine längere Lebensdauer und bessere Schließeigenschaften aufweist, wenn der Ventilteller aus einem härteren Material besteht als der Ventilsitz.

Daher ist es auch vorteilhaft, wenn der Ventilsitz aus Aluminium oder Stahl besteht. Besonders geeignet für den Ventilsitz ist aus o.g. Gründen Aluminium, da dies weicher als Edelstahl ist.

Bei dem erfindungsgemäßen Ventil handelt es sich vorteilhafterweise um ein Doppeltellerventil, da bei Verklebung dieser Ventile doppelt soviel Kraft für die Öffnung der Ventile aufgewendet werden muss. Da die erfindungsgemäße Beschichtung die Abzugskraft verringert, ist sie für Doppeltellerventile besonders geeignet.

Vorzugsweise ist das Ventil dadurch gekennzeichnet, dass gegenüber einem unbeschichteten Ventil die Kraft das Ventil zu öffnen mindestens um 8 % niedriger ist, wenn der Ventilteller und/oder der Ventilsitz mit Abgaskondensat verschmutzt ist. Diese Kraft wird auch als Abzugskraft bezeichnet. Dadurch kann ein zusätzlicher Motor zum Öffnen der Ventile kleiner dimensioniert werden oder sogar entfallen.

Die keramische Beschichtung kann beispielsweise durch Verfahren wie Vakuumbeschichtungsverfahren (beispielsweise PVD oder CVD) oder durch Aufdampfen aufgebracht werden. Auch das Auflackieren oder Sprühen einer Metallalkoholatlösung mit anschließender Aushärtung bei erhöhter Temperatur kann bei der Beschichtung zum Einsatz kommen.

Vorzugsweise wird die Beschichtung in einem Sprühbeschichtungsverfahren aufgebracht. Hierbei werden Lösungen von Metallfettsäuresalzen eingesetzt. Besonders bevorzugt sind Metallsalze von Kalzium, Titan, Chrom, Mangan, Kobalt, Zink, Eisen, Zirkon, Barium, Cerium, Zinn, Blei und Wismut. Als besonders geeignet haben sich Metalloktanoate herausgestellt, insbesondere Zirkoniumoktanoat. Als Lösungsmittel eignen sich besonders Alkohole, insbesondere Isopropanol. Die Lösung kann als Lack aufgesprüht, gepinselt oder gerakelt werden. Fluten, Tauchen oder ähnliche Auftragsverfahren sind ebenfalls erfindungsgemäß bevorzugt. Die Aushärtung der so aufgetragenen Beschichtung erfolgt meist bei einer Temperatur im Bereich von 200 bis 800 °C, insbesondere bei etwa 500 °C und dauert üblicherweise 0,2 bis 10 Stunden, insbesondere etwa 1 Stunde. Die Temperatur kann gegebenenfalls innerhalb dieser Zeit auch variiert werden.

### Ausführungsbeispiel

Es wurden Abzugstests an beschichteten Ventiltellern durchgeführt die mit einem Kleber auf dem Ventilsitz verklebt sind; Abzugskraft des Ventiltellers vom Ventilsitz wurde gemessen und verglichen.

Ziel der Untersuchung ist die Ermittlung einer Beschichtung die die Abzugskräfte zum Öffnen eines Abgasrückführventils verringert zur Sicherstellung der Funktion des Bauteils.

### Versuchsaufbau:

### 1. Ventilsitz und Ventilteller

Als Ventilsitz wurde ein serienmäßig erhältlicher Ventilsitz eines Abgasstranges eine PKW aus Aluminiumguss verwendet. Als Ventilteller wurde ein entsprechend serienmäßig erhältlicher Ventilteller aus Edelstahl verwendet.

### 2. Abzugsapparatur

Ein Ventilsitz aus Aluminium wird auf einem Stativboden eines Stativs befestigt. Über dem Ventilsitz am Stativhalter befestigt, befindet sich eine handelsübliche Federwaage mit Schleppzeiger (Fa. Kern bis 200 N). Der Haken der Federwaage wird mit einem Kevlarfaden mit dem verklebten Ventilteller (der Ventilteller ist rund und hat mittig eine Bohrung) verbunden. Anschließend wird über den Drehhebel am Stativhalter die Federwaage nach oben bewegt bis der Kevlarfaden gespannt ist. Dann wird langsam (ca. 1 cm pro Sekunde auf der Federwaage entspricht ca. 10 N/s) weitergedreht bis der Ventilteller vom Ventilsitz abreißt. Der Schleppzeiger markiert die maximal aufzuwendende Kraft.

Für eine Auswertung wurden jeweils Vergleichsmessungen durchgeführt. Es wurden immer gleichzeitig mind. 3 unbeschichtete und 3 beschichtete Ventilteller auf Ventilsitzen verklebt und 12 h bei 40 °C getrocknet. Anschließend wurden die Mittelwerte der Ablösungskräfte von unbeschichteten und beschichteten Ventiltellern verglichen.

### 3. Kleber

Da aufgrund der komplexen Zusammensetzung von Abgaskondensate kein Kleber im Labor exakt nachgestellt werden kann, wurde ein geeigneter Kleber für die Laborzwecke hergestellt.

### Zusammensetzung:

40g Saccharose in 100g Wasser Zugabe von 1 ml 10% SalzsäureLösung.
Dieser Kleber muss nach 1 Woche Lagerung bei Raumtemperatur immer wieder frisch angesetzt werden.

### 4. Beschichtungsmaterial

Als Beschichtungsmaterial wurde das folgende Zirkoniumsalz der Octansäure eingesetzt:
400g einer Lösung aus
   - 68 Gew.-% Octansäure, Zirkoniumsalz
   - 3,5 Gew.-% 2-(2-Butoxyethoxy)ethanol
   - 31,5 Gew.-% Naphta (Erdöl mit Wasserstoff behandelt).
400g 2-Propanol

Beides wurde unter Rühren zusammengeben.
Die Lösung wurde leicht trüb und konnte ca. 2 Tage verwendet werden.
Die Lösung konnte als Lack aufgesprüht, gepinselt oder gerakelt werden.
Fluten und Tauchen war ebenfalls möglich.

### 5. Applikation

Die Beschichtung wurde nur auf der Dichtfläche der Ventilteller aufgebracht. Die Applikation erfolgte mittels einer handelsüblichen Lackierpistole (Fabrikat Sata).

### 6. Aushärtung

Die Aushärtung der Beschichtung erfolgte bei 500 °C. Die Endtemperatur von 500 °C wurde 1 Stunde gehalten. Die Aufheizrate hatte keinen maßgeblichen Einfluss.

### 7. Ergebnisse (Abzugskräfte in [N])

| Abzugskräfte in [N] | Beschichtungsvorgänge | | | | | | |
|---|---|---|---|---|---|---|---|
| | 1 | 2 | 3 | 4 | 5 | 6 | 7 |
| unbeschichtet | 65,8 | 34 | 66,3 | 55 | 41,5 | 36,5 | 34 |
| Beschichtet mit Glas (s. WO 02/23033) | 60,8 | 27,5 | 51,9 | 50,6 | 37,5 | 29 | 29 |
| Erfindungsgemäße ZrO₂- Beschichtung | 50,8 | 25,5 | 45 | 45,8 | 34,5 | 27 | 26 |

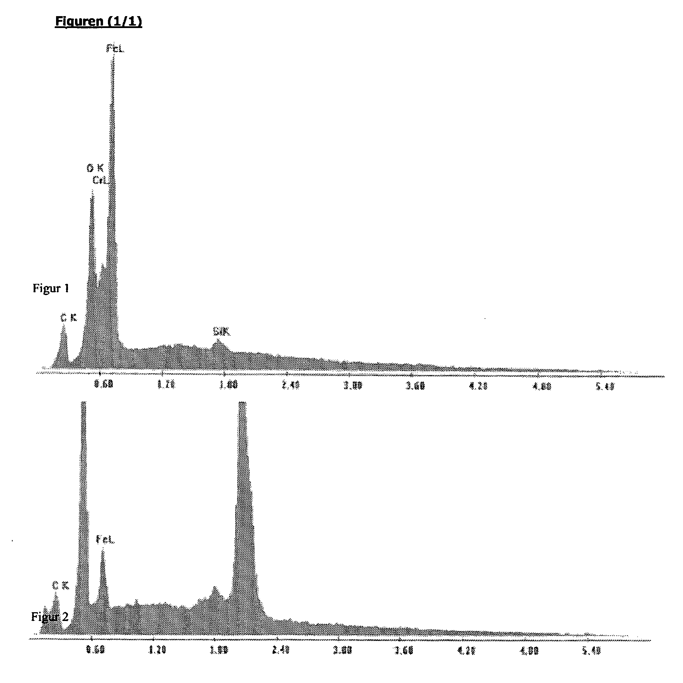

Die Schichtdicke der ZrO₂ - Beschichtung wurde mit einem Rasterelektronenmikroskop (Environmental Scanning Electron Microscope, ESEM) in Kombination mit energiedispersiver Röntgenanalytik (EDX) untersucht. Mit Hilfe des ESEM wurden zwei Analysebereiche für die EDX-Analyse (Übersichtsspektrum bei Anregungsspannung 6 keV, Messbereich 250 µm x 250 µm) ausgewählt: in einem Analysebereich ist die Oberfläche des Stahlsubstrates nicht mit ZrO₂ beschichtet und in dem anderen Analysebereich ist die Oberfläche des Stahlsubstrates mit ZrO₂ beschichtet. Figur 1 zeigt das EDX-Übersichtsspektrum des unbeschichteten Analysebereiches und Figur 2 zeigt das EDX-Übersichtsspektrum des beschichteten Analysebereiches. Figur 2 zeigt eine deutliche Zr L Signallinie. Nach dem Algorithmus nach Castaing ergibt sich eine maximale Eindringtiefe von 220 nm. Da deutliche Signale von Fe und Cr detektiert werden, hat die ZrO₂ Schicht eine geringere Schichtdicke als 220 nm. Weiterhin wurde ein Monte-Carlo-Verfahren (ZrO₂ Dichte 5,7 g/cm³; Anregungsspannung 6 kV, Strahldurchmesser 30 nm, Einstrahlwinkel 90°) eingesetzt, um die Pfade der hochenergetischen Elektronen im EDX-Verfahren zu simulieren. Die Schichtdicke konnte mit diesem Verfahren auf 100 bis 150 nm abgeschätzt werden.

## Patentansprüche

1. Metallisches Ventil **dadurch gekennzeichnet, dass** der Ventilteller und/oder der Ventilsitz eine keramische Beschichtung mit einer Schichtdicke in einem Bereich von 10 bis 1000 nm aufweist.

2. Ventil gemäß Anspruch 1 **dadurch gekennzeichnet, dass** die Schichtdicke der Beschichtung in einem Bereich von 100 bis 220 nm liegt.

3. Ventil gemäß einem der Ansprüche 1 oder 2 **dadurch gekennzeichnet, dass** das Material der Beschichtung ausgewählt ist aus Oxiden der Metalle der 3., 4. und/oder 5. Haupt- und Nebengruppe des Periodensystems der chemischen Elemente, insbesondere ZrO₂ ist.

4. Ventil gemäß einem der Ansprüche 1 bis 3 **dadurch gekennzeichnet, dass** die Beschichtung mindestens auf der Dichtfläche, aufgebracht ist.

5. Ventil gemäß einem der Ansprüche 1 bis 4 **dadurch gekennzeichnet, dass** der Ventilteller aus Aluminium oder Stahl besteht, insbesondere aus Edelstahl besteht.

6. Ventil gemäß einem der Ansprüche 1 bis 5 **dadurch gekennzeichnet, dass** der Ventilsitz aus Aluminium oder Stahl besteht, insbesondere aus Aluminium besteht.

7. Ventil gemäß einem der Ansprüche 1 bis 6 **dadurch gekennzeichnet, dass** es sich bei dem Ventil um ein Doppeltellerventil handelt.

8. Ventil gemäß einem der Ansprüche 1 bis 7 als Bestandteil eines Abgasrückführventils eines Verbrennungsmotors.

## Claims

1. A metallic valve, **characterized in that** the valve disk and/or the valve seat has a ceramic coating with a layer thickness within a range of from 10 to 1000 nm.

2. The valve according to claim 1, **characterized in that** the layer thickness of the coating is within a range of from 100 to 220 nm.

3. The valve according to either of claims 1 or 2, **characterized in that** the material of the coating is selected from oxides of the metals of the 3rd, 4th and/or 5th main and auxiliary groups of the Periodic Table of chemical elements, especially ZrO₂.

4. The valve according to any of claims 1 to 3, **characterized in that** the coating has been applied at least to the sealing surface.

5. The valve according to any of claims 1 to 4, **characterized in that** the valve disk consists of aluminum or steel, especially of stainless steel.

6. The valve according to any of claims 1 to 5, **characterized in that** the valve seat consists of aluminum or steel, especially of aluminum,

7. The valve according to any of claims 1 to 6, **characterized in that** said valve is a double-disk valve.

8. The valve according to any of claims 1 to 7 as a component of an exhaust gas recirculation valve of a combustion engine.

## Revendications

1. Soupape métallique, **caractérisée en ce que** la tête de soupape et/ou la siège de soupape possède un enduit céramique ayant une épaisseur de couche comprise dans la gamme allant de 10 à 1000 nm.

2. Soupape selon la revendication 1, **caractérisée en ce que** l'épaisseur de couche dudit enduit est comprise dans la gamme allant de 100 à 220 nm.

3. Soupape selon l'une quelconque des revendications 1 ou 2, **caractérisée en ce que** le matériau dudit enduit est choisi parmi les oxydes de métaux des troisième, quatrième et/ou cinquième groupes principaux ou secondaires du tableau périodique des éléments chimiques, notamment ZrO₂.

4. Soupape selon l'une quelconque des revendications 1 à 3, **caractérisée en ce que** l'enduit est appliqué sur au moins la surface d'étanchéité.

5. Soupape selon l'une quelconque des revendications 1 à 4, **caractérisée en ce que** la tête de soupape est composée d'aluminium ou d'acier, notamment d'acier inoxydable.

6. Soupape selon l'une quelconque des revendications 1 à 5, **caractérisée en ce que** la siège de soupape est composée d'aluminium ou d'acier, notamment d'aluminium.

7. Soupape selon l'une quelconque des revendications 1 à 6, **caractérisée en ce que** ladite soupape est une soupape à double tête.

8. Soupape selon l'une quelconque des revendications 1 à 7 en tant de composant d'une vanne de recirculation de gaz d'échappement d'un moteur à combustion.
